# EUROPEAN PATENT APPLICATION

(11) **EP 1 700 639 A1**
(43) Date of publication of application: **13.09.2006**
(21) Application number: 05005367.7
(22) Date of filing: 11.03.2005
(51) Int. Cl.: B05C 17/01, A61C 9/00

(54) **Dispensing device**

(71) Applicant: 3M Innovative Properties Company, St. Paul, Minnesota 55144-100 (US)
(72) Inventor: Harre, Manfred, 86899 Landsberg am Lech (DE); Wagner, Ingo, 82237 Steinebach (DE); Müller, Dirk, 80689 München (DE)
(74) Representative: Vossius & Partner

(57) **Abstract**

The present invention is related to a devices, systems and methods for dispensing single- or multiple-component flowable substances. In particular, the present invention is directed to device for dispensing at least one flowable substance, comprising at least one force transmitting member (23,24,33,34) adapted to a) transmit a pushing force in a direction toward or opposite the substance and b) be gathered non-linearly. In particular, the present invention is directed to dispensing materials such as multiple-component impression materials used for making models of an area of the teeth.

## Description

### TECHNICAL FIELD

The present invention is related to a device, method and system for dispensing single-or multiple-component flowable substances. In particular, the present invention is directed to dispensing dental materials, such as multiple-component impression materials used for making models of an area of the teeth.

### BACKGROUND OF THE INVENTION

Devices for dispensing single- and multiple-component flowable substances, such as dental materials, are well known in the art and widely used in several fields. For instance, single-component dispensers can be used for dispensing single-component dental materials.

Multiple-component dispensers can be designed to provide both mixing and dispensing of substances. Such dispensers for mixing and dispensing are desirable, particularly in cases where substances should be mixed just prior to use.

For example, EP-A-0492413 discloses an apparatus for mixing and dispensing multiple-component substances. The apparatus includes a housing, a trough-shaped receptacle for two adjacent parallel cartridges which have a mixer head attached to their front ends, rigid pistons movably disposed in the cartridges, an electrical motor for driving the pistons, a mixer rotating shaft extending parallel to, and disposed between, the cartridges and having its front end engaging a mixer element rotatably supported within the mixer head, and an electrical motor for driving the shaft. The two pistons are rigidly interconnected at their back ends by a transverse member and are advanced in common by an electrical motor. In operation, a unit consisting of filled cartridges and a mixer head attached thereto is placed into the receptacle. The pistons are then slowly advanced within their respective cartridges so as to urge the two components into the mixer head. Simultaneous rotation of the mixer element causes the components to be mixed to form a ready-to-use substance which is forced out of a dispensing opening of the mixer head. After the desired amount has been dispensed, the apparatus is switched off.

Such an apparatus is similar to one of the Pentamix™ mixing units commercially available and manufactured by 3M-ESPE AG (Seefeld, Germany). The Pentamix™ mixing unit is used to mix and dispense dental materials. This is particularly advantageous for dental impression materials where a base paste and a catalyst paste are usually provided for mixing by a device operated by the user. In most cases, a cartridge having sections containing the prepackaged pastes is loaded into the mixing unit. The pastes are displaced by pistons out of their respective packages and into a mixing area where they are dynamically or statically mixed.

Although these dispensing devices are quite reliable in terms of accurately and conveniently mixing and dispensing substances, there are some disadvantages associated with the size of the device. For example, some of the commercially available Pentamix™ devices are at least 350mm in length, 310mm in height, and 235mm in width. This may pose a disadvantage to customers having limited counter space for storing and using such table-top devices.

There are several hand-held dispensing devices known in the art designed for dispensing flowable substances.

For example, DE 34 37 306 describes a motorized single component hand-held device for dispensing construction material such as sealant, adhesive or putty. The device comprises an area for receiving a cartridge filled with the construction material and a driving member for pushing the material forward out of the front end of the cartridge. Instead of using a rigid piston as driving member as commonly used in such dispensing devices, the device of DE 34 37 306 uses a telescopic spindle having a rigid piston rod attached to its front end, in order to minimize the storage area necessary for the driving member when fully retracted. The telescopic spindle is adapted to slide forward and backward in overlapping sections along the longitudinal axis of the material cartridge. The forward and backward movement of the spindle is actuated by a worm gear arrangement. In order to hinder rotation of the overlapping sections of the spindle as the spindle is retracted, a guide wire is provided, in part, within the interior of the spindle. The guide wire is attached to the front section of the spindle and is adapted to securely pull the front section away from the substance thereby hindering the spindle from rotating.

EP 0 128 364 also describes a hand-held device for dispensing single component sealing pastes . The device also comprises an area for receiving a cartridge filled with the construction material and a driving member for driving the construction material forward out of the device. In EP 0 128 364, the driving member is a coil or helical spring attached to a piston rod and the elastic force of the spring is used in part to drive the construction material forward. In one embodiment of the device of EP 0 128 364, two bands windable around respective winches are used to assist in the forward and backward movement of the spring. One band is associated with the piston rod attached to the rear end of the spring. This band provides forward movement of the spring by pulling the rear end of the piston rod. The other band is associated with the front end of the spring. This band provides backward movement of the spring by pulling the front end of the spring.

There is a need for improved dispensing devices, in particular devices which provide reliability in mixing and dispensing and can bere, in terms of size, economic in design.

### SUMMARY OF THE INVENTION

It is therefore an object of the present invention to provide improved dispensing devices, systems and methods. This object is particularly attained with the subject-matter as recited in the claims or as apparent from the following description.

It is a preferred advantage of the present invention to provide a significant reduction in the overall size of the dispensing device and to provide a reliable device which further preferably may even have an improved strength or rigidity.

The dispensing device of the present invention comprises at least one force transmitting member adapted to a) transmit a pushing force in a direction toward or away from (opposite to) the substance and b) be gathered non-linearly.

The force transmitting member of the present invention may be in any suitable form which allows the member to transmit a pushing force in a direction toward or away from the substance without being collapsed, yet is adapted to be gathered or collected or accumulated non-linearly. The force transmitting member can be gathered "non-linearly" in the sense that it can be gathered or collected or accumulated, at least in part, spirally, in an angled, bent, coiled, looped, wound or folded configuration or any other non-linear fashion.

When extended, the force transmitting member forms a rigid structure for transmitting force in a direction toward or away from the substance. Preferably, the force transmitting member comprises structured elements designed to prevent the force transmitting member from folding, buckling, bending or collapsing during linear thrust motion. The force transmitting member is preferably configured to realize thrust forces up to 10kN. For example, thrust forces necessary for dispensing dental impression materials can be between 1 and 7kN.

When retracted, the force transmitting member is configured to gather, collect or accumulate, e.g. to be bent, coiled, looped, wound or folded spirally, in an angled or similar manner. This preferably enables a reduction in storage space for the force transmitting member. In this respect, the length of the device of the present invention with a maximally retracted force transmitting member may be less than twice the axial drive length of the transmitting member and preferably less than 1.5 times the axial drive length. This reduces. the size of the overall device, which can have particular advantages in an area with limited space.

Preferably, the force transmitting member comprises a series of foldably connected elements such as a so called push-pull chain designed such that folding of the force transmitting member is permitted when the force transmitting member is gathered non-linearly, and folding is not permitted when the force transmitting member is extended under linear thrust motion. Each element can be so structurally designed and linked such that folding or bending of the force transmitting member is permitted in only one direction when being gathered non-linearly, but when extended under linear thrust motion, folding or bending of the force transmitting member is not permitted and the elements link to form a rigid structure. For example, the force transmitting member may be in the form of a push-pull chain (e.g. a Framo® push-pull chain manufactured by Framo®-Franz Morat KG, Eisenbach, Germany), coil, bendable rod, structured cable or an articulated member mounted on a wire or similar elements or elements being a composition of some of these structures. One further example of a push-pull chain of the type that can be used in this invention is the one disclosed in EP 936 378, the contents of which are incorporated by reference herein.

The present invention may also comprise at least one material section for receiving the substance or, in the case of a multiple-component substance, a component of the substance to be dispensed. The material section can be in any suitable form. For example, the material section can be in the form of a compartment, chamber, cartridge, reservoir or cylindrical groove for receiving a substance. Preferably, a material section is provided for each component of the substance to be dispensed. The at least one material section of the device may also be an area for receiving a cartridge containing the substance(s) or components of the substance to be dispensed. The component or substance in the material section or cartridge may also be pre-packaged in foil, a cylindrical tube or the like. Preferably, the force transmitting member is configured to extend the entire length of the material section in order to assure that the substance can be completely displaced from its container.

Preferably, the force transmitting member is adapted to transmit pushing or pulling force along or essentially parallel to the longitudinal axis of the respective material section when being extended along or essentially parallel to that axis. The force transmitting member can also be adapted to transmit pushing or pulling force in a transverse direction or any other suitable direction to displace substance, material or components thereof. Preferably, the force transmitting member is adapted to gather non-linearly when retracted such that the force transmitting member has a length in the direction of the material section when retracted at least in part that is less than the length of its maximum possible axial extension. Preferably, the length of the device is less than twice the length of the pre-packaged material components. In this respect, the length of the material section is approximately equal to the length of the pre-packaged component contained therein.

The device of the present invention may also comprise at least one displacement element associated with each of the at least one force transmitting member(s). Preferably, the displacement element is slideable within a corresponding material section for pushing the substance contained therein. Preferably, the displacement element is a plunger, plate, pressing element or the like.

Preferably, the device comprises at least one guiding member for gathering or collecting the force transmitting member. The guiding member is preferably adapted to gather the force transmitting member spirally or in an angled configuration. The guiding member may also gather (when retracted) or drive (when extended) the force transmitting member. For example, the guiding member may be a sprocket, wheel or reel which gathers and drives the force transmitting member. A guiding member may be provided for each force transmitting member. The device may also comprise gear members, drive shafts and the like for driving the guiding member.

Preferably, the device of the present invention also comprises an actuation unit for actuating the force transmitting member in a forward or reverse direction. For example, the actuation unit may comprise an electrical actuation device such as an electrical motor. The actuation unit may also comprise a manual actuation device for activating the transmitting member thereby causing the transmitting member to move in either a forward or reverse direction. For example, such a manual actuation device can be in the form of a handle, ratchet, hand wheel and/or manipulating device used to advance or retract the transmitting member.

The device of the present invention may also comprise a mixing area for receiving and mixing or merging the substances. Preferably, the mixing area comprises a static mixer or dynamic mixer, and either can be provided in any suitable form. For example, the static mixer may be a spiral shaped element providing passive mixing of the substances as the substances are driven through the spiral element. The dynamic mixer may be a spiral element rotationally driven by a shaft associated with the actuation unit. The mixing area can be in any suitable form. For example, the mixing area can be a mixer nozzle.

In an aspect of the present invention, the dispensing device comprises at least one force transmitting member adapted to transmit pushing force in a direction toward the substance and to be gathered non-linearly. When activated, the force transmitting member is caused to unfold and extend substantially linearly. Once extended and advanced forward, the force transmitting member pushes the substance forward to cause dispensing of the substance or to urge the substance into a mixing area. In this aspect of the invention, the transmitting member transmits pushing force in the direction of the substance in order to displace the substance in a forward direction.

In a second aspect of the present invention, the force transmitting member is adapted to transmit pushing force in a direction opposite the substance and to be gathered non-linearly. In this aspect of the invention, the force transmitting member transmits pulling force in order to cause displacement of the substance in a forward direction.

In this aspect of the invention, the force transmitting member is preferably associated with a displacement element which is slideable within a material section and is suitable for pushing the substance in the material section. Preferably, the displacement element comprises side elements which can be linked to the force transmitting member. Preferably, a displacement element is provided for each material section. The material section may comprise at least one slot along the side of the material section for receiving at least one side element of the displacement element. The material section may also be in the form of a cylindrical groove for receiving the substance.

The device of the present invention may be a single-component dispenser, for example like the type used for household and construction repairs for dispensing adhesive, caulk and other similar materials. The device of the present invention is preferably a multiple-component dispenser which provides both mixing and dispensing of substances, for example like the type used for mixing and dispensing dental impression materials.

The device of the present invention can be in any suitable form for dispensing. For example, the dispensing device of the invention may be a hand-held device. The dispensing device of the invention may also be a table-top device.

The dispensing device of the present invention may be used to dispense a wide variety of flowable substances or materials which are suitable for dispensing by displacement as provided for by the present invention. For example, such substances may include dental materials, pastes, adhesives, sealants, caulk or the like or components thereof. The term "caulk" is intended to encompass a variety of viscous materials including mastic, silicone and other related sealants or pastes used particularly for construction or repairs.

The present invention is also directed to a system for dispensing highly viscous dental materials, the system comprising the device of the present invention and at least one cartridge placeable into a material section of the device where the cartridge contains a dental material or components thereof. Preferably, the system comprises an actuation unit for actuating the at least one force transmitting member of the device. The actuation unit preferably comprises at least one drive train for moving and/or guiding the at least one force transmitting member of the device. Preferably, the system comprises a mixing area for mixing dental material components when the components are expelled from the cartridge. The mixing area may also comprise an area for first merging the components and then they may be mixed.

The present invention is also directed to a system for dispensing caulk material, the system comprising the device of the present invention and at least one cartridge placeable into a material section of the device where the cartridge contains a caulk material or components thereof. Preferably, the system for dispensing caulk material is a hand-held system. The caulk material preferably comprises adhesive, mastic, silicone or other sealants or pastes used for construction or repairs. The system preferably comprises an actuation unit for actuating the at least one force transmitting member of the device. The actuation unit preferably comprises at least one drive train for moving and/or guiding the at least one force transmitting member of the device.

The present invention is also directed to methods for dispensing flowable substances using the device of the present invention, the method comprising providing at least one force transmitting member adapted to a) transmit a pushing force in a direction toward or opposite the substance and b) be gathered non-linearly. Preferred features of the device explained above or below are also relevant preferred features of the method according to the present invention.

### BRIEF DESCRIPTION OF THE DRAWINGS

Preferred embodiments of the present invention will be further described by the following description and drawings:
**Fig. 1** is a perspective view of a prior art device.
Fig. 2 is a longitudinal side view of a prior art device.
Fig. 3 is a perspective view of an embodiment of the device according to the present invention.
Fig. 4 is a rear perspective view of the embodiment of the invention shown in Figure 3.
Fig. 5 is a longitudinal side view of the embodiment of the shown in Figure 3.
Fig. 6 is a perspective view of another embodiment of the device according to the present invention.
Fig. 7 is rear perspective view of the embodiment of the invention shown in Figure 6.
Fig. 8 is a longitudinal side view of the embodiment of the shown in Figure 6.

### DETAILED DESCRIPTION

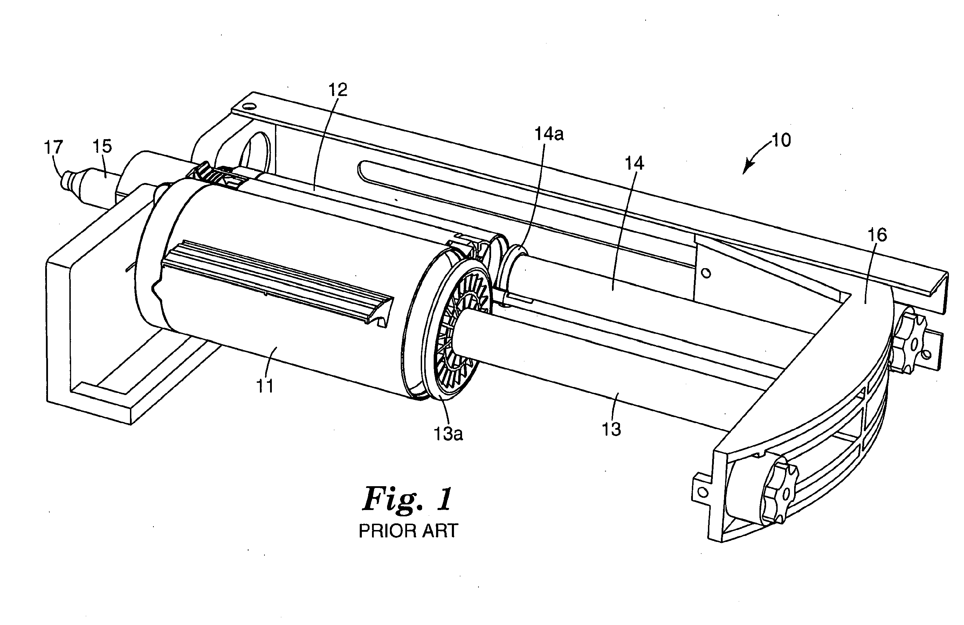

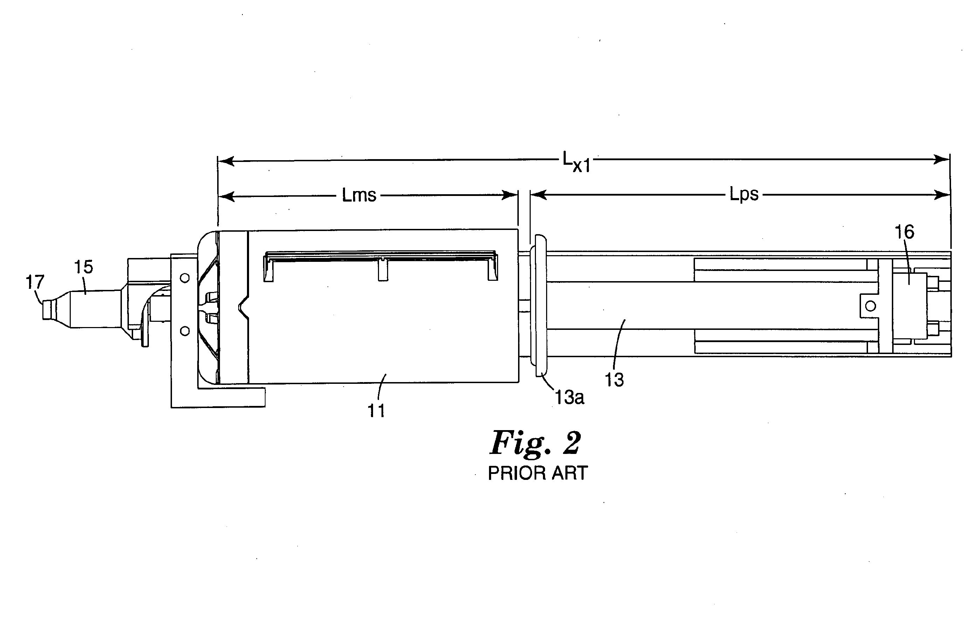

Figures 1 and 2 illustrate a prior art dispensing device 10 for mixing and dispensing multiple-component substances. Such a device 10 is similar to one of the Pentamix™ mixing units commercially available and manufactured by 3M-ESPE AG, Seefeld, Germany. This dispensing device 10 essentially comprises two adjacent parallel sections 11, 12 suitable for containing substances, a drive unit comprising two pistons 13, 14 serving as force transmitting members and movably disposed within respective material sections 11, 12 for displacing the substances contained in sections 11, 12 in a forward direction, an electrical motor for driving the pistons 13, 14 and a mixer nozzle 15 in fluid communication with the front ends of material sections 11, 12. The pistons 13, 14 are rigidly interconnected at their back ends by a transverse member 16 for ensuring that the pistons 13, 14 are driven simultaneously into material sections 11, 12. Each piston 13, 14 comprises a piston head and piston rod.

In operation, a cartridge unit having material sections 11, 12, each containing a pre-packaged substance, is placed into the dispensing device 10. The pistons 13, 14 are designed such that their piston heads may abut the back ends of the packaged substances. As shown in Figure 1, piston head 13a is dimensioned to fit within material section 11 having a diameter slightly larger than that of piston head 13a. The pistons are made rigid in order to ensure that sufficient thrust force is applied in the longitudinal axial direction. As pistons 13, 14 are moved forward within material sections 11, 12, the packaging of the substances is opened. The pistons 13, 14 are slowly advanced into respective material sections 11, 12 so as to urge the two substances in material sections 11, 12 into the mixer nozzle 15. The substances are mixed in the mixer nozzle 15 to form a ready-to-use substance which is forced out of a dispenser output 17 of the mixer nozzle 15. After the desired amount has been dispensed, the device 10 is switched off.

In order to assure that the packaged substances can be completely pressed out by the pistons, pistons 13, 14 are designed such that they are slideable along the entire length of respective material sections 11, 12 containing the packaged substances. To this end, the piston including piston head and rod is generally designed to have a length that is at least equal to or greater than the length of the respective material section containing the substance. When the pistons 13, 14 are not engaged into material sections 11, 12, they are stored in a fully retracted position as shown in Figures 1 and 2. The length of the storage area Lps for the fully retracted piston corresponds at least to the length of the piston. which preferably corresponds to the length Lms of material section. The entire length Lₓ₁ of such a device corresponds at least to Lms plus Lps. This represents a drawback since the storage area for the piston has to be accommodated longitudinally and thus adds to the length or size of the device.

The present invention provides alternative drive mechanisms for displacing substances forward whereby the storage area Lps for the force transmitting member, particularly along the longitudinal axis, can be significantly reduced.

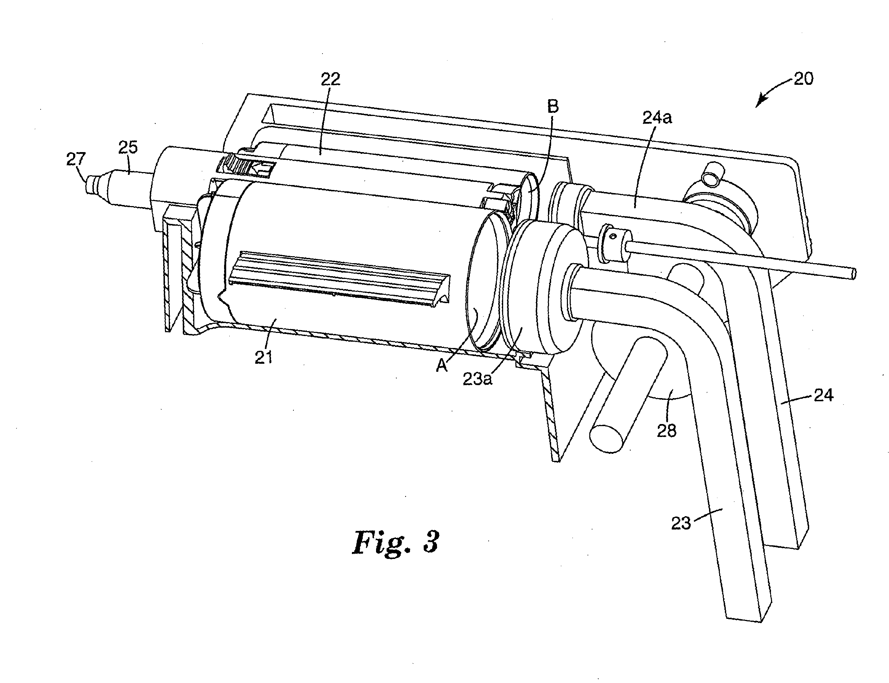

Figures 3 - 5 illustrate an embodiment of a dispensing device 20 according to the first aspect of the present invention. This embodiment of the present invention, as shown in Figures 3 - 5, relates to a dispensing device 20 for mixing and dispensing a two-component substance.

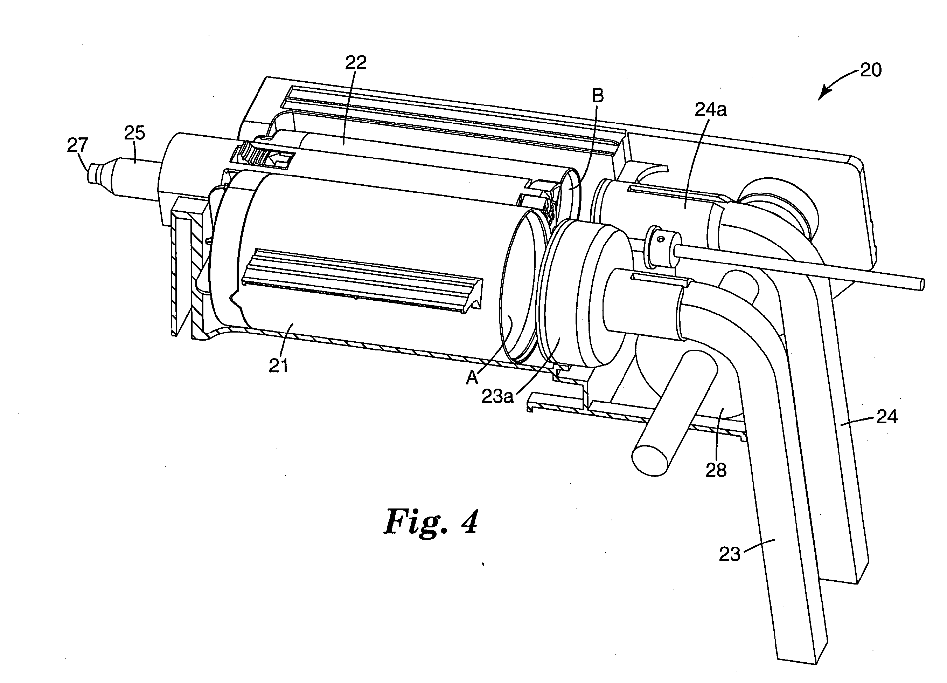

Referring to Figures 3 and 4, the dispensing device 20 of this embodiment of the invention comprises two adjacent parallel material sections 21, 22 suitable for containing respectively substances A and B, two force transmitting members 23, 24 movably disposed within respective material sections 21, 22 for displacing substances A, B in a forward direction and a mixer nozzle 25 in fluid communication with the front ends of material sections 21, 22.

The force transmitting members 23, 24 of the present invention transmit linear thrust force along the longitudinal axis of the respective material sections 21, 22 when they are extended along that axis and, at the same time, are adapted to gather non-linearly, as shown in Figures 3 and 4. The force transmitting member can also be adapted to transmit pushing or pulling force in a transverse direction or any other suitable direction to displace substance, material or components thereof. The force transmitting members 23, 24 of this embodiment are adapted to transmit pushing force in a direction toward the substance in order to cause forward displacement of the substance.

When extended, the force transmitting member 23, 24 forms a structure sufficiently rigid to transmit force against the substance A, B contained in the material section 21, 22 preferably in to displace the material in the direction of an opening. Thus, the substance can be compressed in an longitudinal, transverse or any other direction of the device, material section and/or material cartridge so that the material is appropriately displaced, preferably in the direction of an opening in the device, material section and/or material cartridge. Also, the transmitting member 23, 24 is configured to extend the entire length of the material section 21, 22. In this respect, reliable and accurate dispensing of the substances can be provided. Preferably, the transmitting member 23, 24 comprises structured elements designed to prevent the transmitting member from bending or collapsing during linear thrust motion. The transmitting member 23, 24 is preferably configured to realize thrust forces up to 10kN.

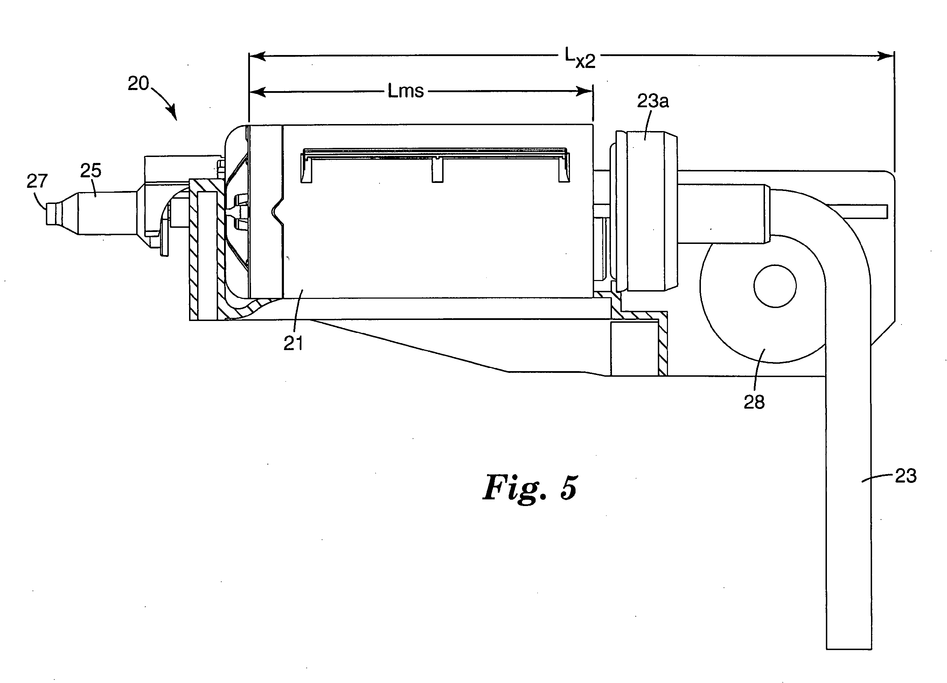

When retracted, the force transmitting member 23, 24 is configured to be gathered, by for example being wound up, looped or folded. This enables a reduction in storage space for the force transmitting member, and thus for the overall device. The device 20 further comprises a guiding member 28 for gathering and driving the transmitting member 23, 24. In this respect, the length Lx₂ of the device 20 with maximally retracted transmitting members 23, 24 as shown in Figure 5, can be less than twice the axial drive length of the transmitting member (i.e. the longitudinal length Lms of the material section), preferably less than 1.5 times the axial drive length. Lms, as indicated in Figures 2, 5 and 8, corresponds to the length of section containing the material or substance. The length Lms of the material section corresponds to slightly more than the length of the packaged substance contained therein.

In operation, a cartridge unit having material sections 21, 22, each containing a packaged substance, is placed into the dispensing device 20. When activated, the transmitting members 23, 24 are advanced forward in a direction toward the substance. Figures 3 and 4 show the transmitting members 23, 24 in fully retracted positions at the rear ends of the respective material sections 21, 22. The transmitting members 23, 24 are caused to unfold and extend along the longitudinal axis of material sections 21, 22. Once extended and advanced within the material sections, the transmitting members 23, 24 push the substances A, B forward in their material sections 21, 22 so as to urge substances A, B into the mixer nozzle 25. The substances are mixed in the mixer nozzle 25 to form a ready-to-use substance which is forced out of a dispenser output 27 of the mixer nozzle 25. After the desired amount has been dispensed, the device 20 is switched off thereby deactivating the force transmitting members and immediately preventing further dispensing of the ready-to-use substance. When the substances A, B are completely dispensed or a different substance is to be used, the transmitting members 23, 24 can be retracted toward the rear ends of their respective material sections 21, 22 in order to allow new packages of substances to be introduced into the material sections 21, 22.

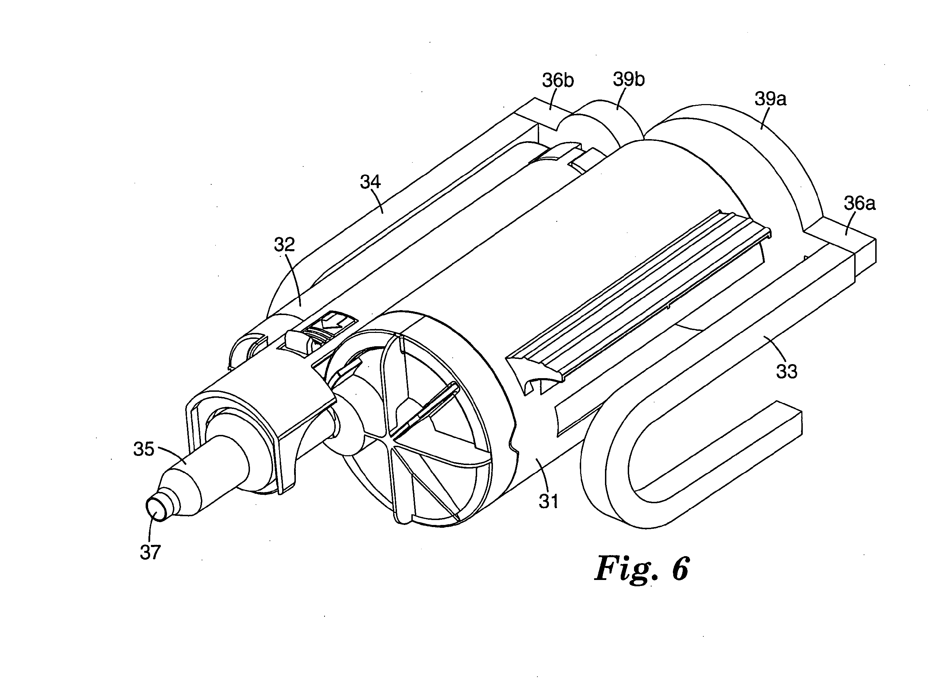

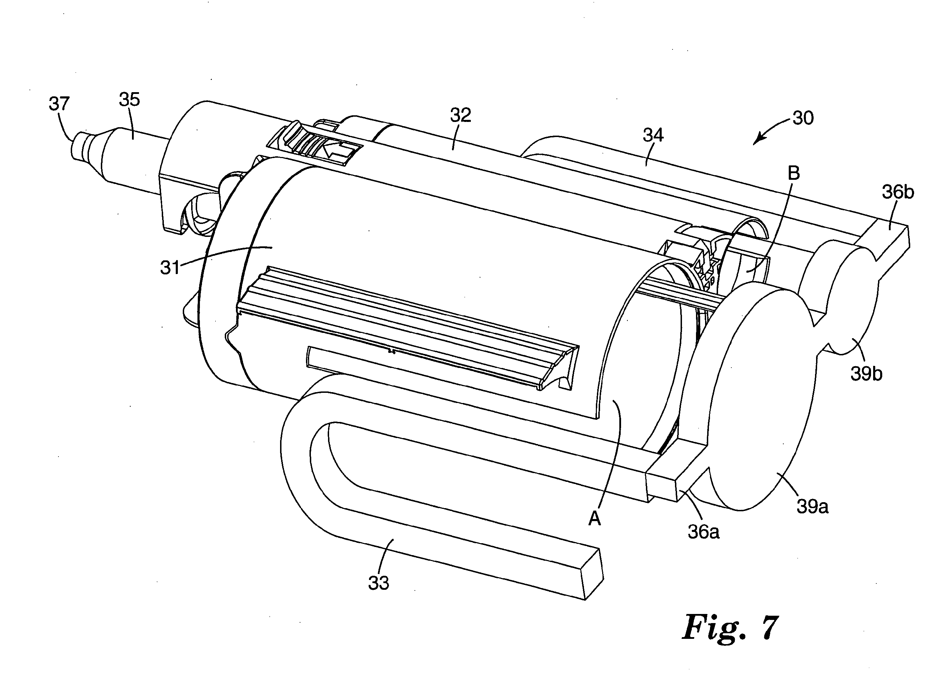

Figures 6 - 8 illustrate an embodiment of a dispensing device 30 according to the second aspect of the present invention. This embodiment of the present invention relates to a dispensing device 30 for mixing and dispensing a two-component substance.

The dispensing device 30 comprises two adjacent parallel sections 31 and 32 suitable for holding respectively packaged substances A and B, two force transmitting members 33 and 34 being associated respectively with plungers 39a and 39b. The plungers 39a and 39b are movably disposed within respective material sections 31 and 32 and serve to displace substances A and B in a forward direction. The plungers 39a, 39b could also be interconnected in order to assure simultaneous movement of the plungers.

The force transmitting members 33, 34 of this embodiment of the invention are adapted to transmit pushing force in a direction opposite the substance. In order to cause forward displacement of substances A, B, force transmitting members 33, 34 are adapted to transmit pulling force in a direction toward the substance. The force transmitting members 33, 34 are also adapted to be gathered non-linearly as can be seen in Figures 6 - 8.

Referring to Figures 6 - 8, at fully retracted positions, plungers 39a, 39b are located at the rear end of respective material sections 31, 32 and the force transmitting members 33, 34 are extended preferably along the entire length of respective material sections 31, 32. As guiding members drive force transmitting members 33, 34 in a direction toward the substance, transmitting members 33, 34 pull side elements 36a, 36b of plungers 39a, 39b in a forward direction. Preferably, transmitting member 33, 34 comprises structured elements designed to prevent the transmitting member 33, 34 from bending or collapsing while being extended under linear thrust motion. Preferably, transmitting member 33, 34 is configured to move in a direction opposite or toward the substance thereby transmitting pushing or pulling forces onto plunger 39a, 39b.

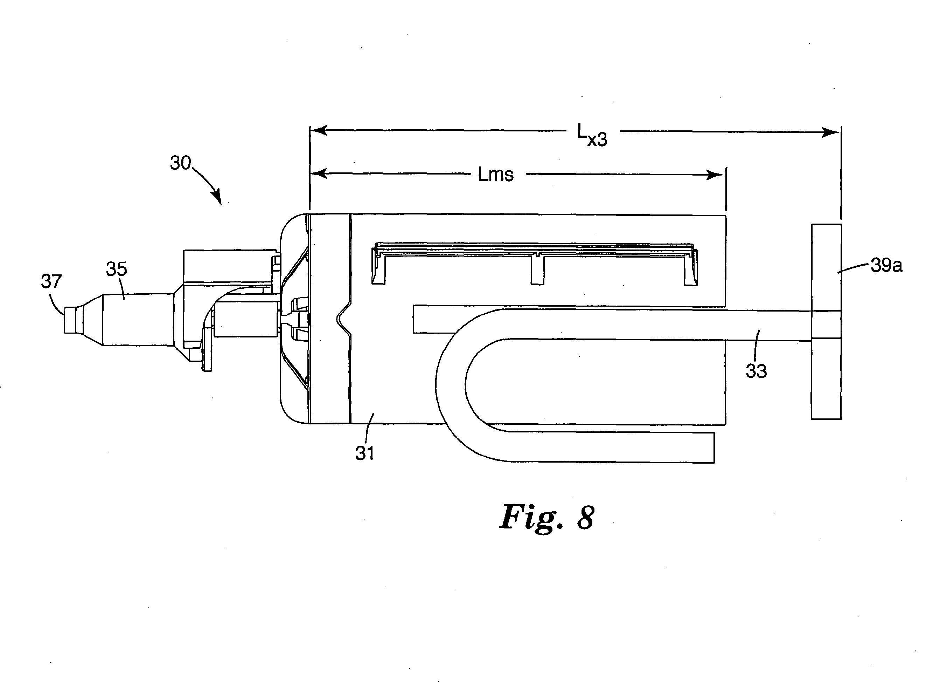

When retracted, the force transmitting member 33, 34 is configured to be gathered non-linearly as shown in Figures 6 - 8. This enables a reduction in storage space for the transmitting member when compared with conventional devices. Preferably, a guiding member guides the force transmitting member 33, 34 as it is being gathered. In this respect, the length of the device 30 with maximally extended force transmitting members 33, 34 as shown in Figure 8 can be less than twice the length of the axial drive length of the force transmitting member (i.e. the longitudinal length Lms of the material section), preferably less than 1.5 times the axial drive length. The length Lms of the material section refers to approximately the length of the packaged substance contained therein.

While being driven forward in operation, the transmitting members 33, 34 are caused to gather non-linearly and, at the same time, plungers 39a, 39b are pulled forward by the transmitting members 33, 34. The plungers 39a, 39b are pulled forward within their respective material sections 31, 32 so as to urge substances A, B into mixer nozzle 35. The substances A, B are mixed in the mixer nozzle 35 to form a ready-to-use substance which is forced out of a dispenser output 37 of the mixer nozzle 35. After the desired amount has been dispensed, the device 30 is switched off thereby deactivating movement of the force transmitting members and immediately preventing further dispensing of the ready-to-use substance.

The various embodiments presented in the specification are used for the sake of description and clarification of the invention, and thus should not be interpreted as limiting the scope of the invention as such. Features of the different embodiments may be interchanged whenever appropriate. Moreover, the present invention is realized by the features of the claims and any obvious modifications thereof.

## Claims

1. A device for dispensing at least one flowable substance, comprising
at least one force transmitting member adapted to a) transmit a pushing force in a direction toward or away from the substance and b) be gathered non-linearly.

2. The device of claim 1, further comprising
at least one material section for receiving the substance; and
wherein said at least one force transmitting member is able to transmit force against the substance to displace it in the direction of an opening.

3. The device of claim 2, wherein said force transmitting member is configured to transmit pushing and/or pulling force(s) along or parallel to the longitudinal axis of said material section.

4. The device of claim 2 or 3, wherein said force transmitting member is adapted to gather non-linearly when retracted such that said force transmitting member has a length in the direction of the material section that is less than the length of its maximum possible axial extension.

5. The device of any of claims 2 to 4, further comprising at least one displacement element associated with each of said at least one force transmitting member, said at least one displacement element being slideable within the corresponding material section for pushing said substance contained therein.

6. The device of claim 5, wherein said at least one displacement element is a plunger.

7. The device of claim 5 or 6, wherein said force transmitting member is configured to transmit a pushing force onto said displacement element thereby causing said displacement element to move in a direction toward said substance in said material section.

8. The device of any of the preceding claims, wherein said force transmitting member comprises a series of foldably connected elements designed such that folding of said force transmitting member is permitted when said force transmitting member is gathered non-linearly, and folding is not permitted when said force transmitting member is extended under linear thrust motion.

9. The device of any of the preceding claims, further comprising at least one guiding member for gathering said at least one force transmitting member.

10. The device of claim 9, wherein said guiding member is adapted to cause said force transmitting member to be gathered spirally or in an angled configuration.

11. The device of any of the preceding claims, wherein said device comprises at least two material sections and a mixing area in fluid communication with front ends of said material sections.

12. The device of claim 1, further comprising:
at least one material section for receiving a substance; and
wherein said at least one force transmitting member is adapted to transmit force along or essentially parallel to a longitudinal axis of said at least one material section thereby causing displacement of said substance in a forward direction and is adapted to gather non-linearly when retracted such that the length (Lx₂, Lx₃) of said device with said at least one force transmitting member being fully retracted is less than twice the length (Lms) of said at least one material section.

13. The device of claim 12, wherein the axial drive length of said force transmitting member is approximately equal to the length (Lms) of said material section.

14. The device of claim 12 or 13, wherein the length (Lx₂, Lx₃) of said device with said at least one force transmitting member being fully retracted is less than 1.5 times the length (Lms) of said at least one material section.

15. The device of any of the preceding claims, wherein the device is a hand-held device.

16. The device of any of claims 1 to 14, wherein the device is a table-top device.

17. A system for dispensing highly viscous dental materials, comprising:
a device according to any of claims 1 to 16; and
at least one dispensing cartridge placeable into a material section of said device and containing a dental material or a component thereof.

18. The system of claim 17, comprising an actuation unit for actuating said at least one force transmitting member of said device.

19. The system of claim 18, wherein said actuation unit comprises at least one drive train for moving and/or guiding said at least one force transmitting member of said device.

20. The system of any of claims 17 to 19, comprising a mixing area for mixing dental material components when the components are expelled from the cartridge.

21. A method for dispensing flowable substances using the device of any of claims 1 to 16, the method comprising:
providing at least one force transmitting member adapted to a) transmit a pushing force in a direction toward or away from the substance and b) be gathered non-linearly.

22. The use of the device of any of claims 1 to 16 or the method according to claim 21 for dispensing dental materials.

23. A system for dispensing caulk material, comprising:
a device according to any of claims 1 to 16; and
at least one dispensing cartridge placeable into a material section of said device and containing a caulk material or a component thereof.

24. The system of claim 23, wherein the system is a hand-held system.

25. The system of claim 23 or 24, wherein said caulk material comprises adhesive, mastic or silicone.

26. The system of any of claims 23 to 25, comprising an actuation unit for actuating said at least one force transmitting member of said device.

27. The system of claim 26, said actuation unit comprises at least one drive train for moving and/or guiding said at least one force transmitting member of said device.
